# EUROPEAN PATENT SPECIFICATION

(11) **EP 3 663 070 B1**
(45) Date of publication and mention of the grant of the patent: **15.09.2021**
(21) Application number: 19213146.4
(22) Date of filing: 03.12.2019
(51) Int. Cl.: B29C 49/04, B29C 49/20, B29C 49/42, B29L 31/00, B29C 49/60

(54) **METHOD IN BLOW MOLDING**
VERFAHREN ZUM BLASFORMEN
PROCÉDÉ DE MOULAGE PAR SOUFFLAGE

(30) Priority: 04.12.2018 TR 201818468
(43) Date of publication of application: 10.06.2020
(73) Proprietor: Ozler Plastik Sanayi Ve Ticaret Anonim Sirketi, 34325 Istanbul (TR)
(72) Inventor: OZADAM, Murat, 34325 Istanbul (TR)
(74) Representative: Demirkiran, Hasan

(56) References cited:
- EP-A2- 2 159 035
- JP-A- H0 326 522
- JP-A- H0 592 480
- US-A- 4 959 190
- US-A1- 2014 170 353

## Description

### Subject of the Invention and Technical Field

This invention relates to the production of the hose carrying the fresh air between the turbocharger and the intercooler in the engine part of the vehicles, by assembling them together in the mold by blowing the air passage element through injection molding elements with complex geometry. In the system and the method of the invention, connection of the two different products in a mold without using another assembling procedure during the production.

### State of the Art

Plastic and derivative industry products thereof are increasingly becoming common in every field in the world. Accordingly a great number of machines and methods are being developed for the production of sub-industry products feed by the said industry. It is evident that majority of the said technical developments are related to the plastic industry products and production methods thereof. The shaping of various materials which are the raw material of plastic is made by injection or plastic blowing method.

Plastic which is a artificial organic product, is shaped by molding, compressing or flowing of macromolecules with the help of heat and pressure. Many products is in the automotive industry are also produced with the molding method from plastic or rubber derivative materials. One of these methods is the plastic blow molding method, known as "blow molding" in the art.

In the blow molding method, thermoplastic raw material with a low melt flow index slowly flows downwards by the effect of gravity in the form of a hose through the closed mold. After the hose is adequately long, a nozzle extends thereinto and an air inlet is provided. Via the pressurized air, the plastic is pushed to the walls so that it takes the shape of the mold and after it is adequately cold, the mold is opened and the product therein is taken out.

During production with the blow molding technique in the state of the art, in case there are notched curved fixing ridges, it is difficult for the flowing plastic material to fill these cavities and these ridges must be assembled to the element externally. The methods used for assembling include production by welding, cored production, spiked element injection production and production with connection element on blowing. In production by welding, flange and hose are produced separately and welded to each other. There is an additional welding procedure in this production method and there are disadvantages such as varying material features during welding and requirement of additional labor. In the cored production method, shaping is provided in the mold with a core. However, in this production, production range is limited as the cores are in limited geometry and have curved structures. In the spiked element injection production, for elements of connection elements with a small scale are produced by providing adherence to the surface of the element during blowing injection by creating a adherence surface. The disadvantage of this method is that, when a great force is used, the elements disengage and injection element cannot be assembled in large elements. In the production with connection element on blowing method, plastic is injected to the area of interest by inserting a hose produced with the blowing method in an injection mold. The problems of this method are that the pressure of the connection element creates deformation on the product, a permanent tension is induced on the product and the product cracks due to this pressure, and larger mold are required in the injection molding procedure.

There are a number of patents and design related to the blow molding method in the state of the art. In the European patent application no. EP19920905605, a method is described wherein a tube-shaped molten polymer is fed through a cavity in a mold where the mold is later blown, and wherein hollow bodies are produced. In the said method, a two-part mold is used, first the loop-shaped bodies are inserted in the mold and after closing the molds, polymer molten material passes through the cavity by being flown between the mold. When the tube to which the blowing procedure was applied takes the shape of the mold, it is cooled and taken out of the mold in a way it is connected to the loop bodies. However, in the said patent loop-shaped bodies and positioned in a way that it flows straight through the tube. No loop-shaped body is positioned at the portions curved like an elbow.

In the international patent application no. WO8904755 a method to produce a molding machine production with tube-shaped elements is described.

In the international patent application no. EP1204525, a cooling tube consisting of thermoplastic materials and used for engines of motor vehicles and production method thereof is described. There is an engaging connection element at the end part of the said tube.

In the patent application no. EP2159035A2, a method for producing a plastic hollow body provided with at least one reinforcing element in a molding toll is described. Mentioned method comprises the following steps: Introducing a hollow body blank made of thermoplastic material in the plastically deformable state into a blow mold cavity of the mold, blow molding the hollow body blank in the blow mold cavity to form the plastic hollow body, providing the at least one reinforcing element on the plastic forming the plastic hollow body. The method comprises the step 'insertion of the at least one reinforcing element into blow mold cavity' prior to blow molding step. So, in this way, the plastic hollow body can be produced in a single work step, provided with a reinforcing element and at the same time a functional element can be attached to the plastic hollow body.

In the patent application no. US2014170353, composite components and methods for forming composite components are described. Mentioned method includes inserting a continuous fiber reinforced thermoplastic tape into a molding device and feeding a parison (paste) that includes a thermoplastic material into the molding device. The method further includes blow molding the parison within the molding device such that the parison bonds with the tape, forming the composite component. So, the composite component obtained in this way includes a blow molded inner layer comprising a thermoplastic material and, an outer layer that includes a continuous fiber reinforced thermoplastic tape and is bonded to the inner layer during blow molding of the inner layer.

In the patent application no. JPH0592480A, a method for performing the molding of a product of a complicated shape having much irregularities and for improving the welding properties between an insert and a parison is described. In the mentioned method, when the hot air generated by the hot air feeding device is fed from the hot air feeding pipe to the hole in the mold through the blow pin, the hole is heated and transfer effect of the parison to the mold is improved. Further, when the hot air is supplied to the insert built-in portion through another hot air supply pipe, the insert is heated and the temperature difference from the parison is reduced.

In the patent application no. US4959190A, a method for making a plastic container by blow molding a tubular parison preferably of extruded thermoplastic material is described. Mentioned method comprises guiding a tube into a divided open blow mold, closing the blow mold and feeding pressurized air into the tubular parison squeezed off in the blow mold. Further in the open blow mold which has a suitable receptable, at least one single-piece hoop ring made of thermoplastic material with appropriate tolerances by injection molding is mounted on the tube and bonded with the tubular parison in the blow molding. The patent application no. JPH0326522A describes a method wherein a rigid reinforcing material to a joint of which an adhesive agent containing metallic powder is applied beforehand is set up within a molding tool on an important part of which an electromagnetic induction coil is arranged, parison comprised of a flexible material is held within the molding tool and simultaneously with blow molding electromagnetic induction bonding is performed.

All existing patents describe the current known situation regarding assembly of an additional part into the mold. However, unlike the present invention, in these patent documents, flowing hose does not provide assembly by passing through inside a peripheral (round) plastic piece and, by flowing and being shaped as reaching to the corner of the path in the mold. So, the methods described in these patent documents cannot provide rotational and forward-backward movements of flowing hose.

As seen in the above-mentioned patents, there are products produced with the blow molding method in the state of the art. However no blow molding method is described wherein the elements can be inserted on the curved portions of the tube to be produced.

### Technical Problems to be Solved by the Invention

It is aimed with the blow molding method of the invention, as defined by claim 1, to insert the connection element product in the mold by producing it beforehand and by passing a hose through this injection product in the mold, to take out the hose and connection elements that are connected to each other out of the mold as an end-product with blowing.

An advantage of method of the invention is that there will be gains in terms of cost and time by proving ease of assembling for connecting the injection elements with complex geometry (the injection elements surrounding the elbow portions) to the hose.

Another advantage of the system of the invention is that frequency tolerance variations caused by the heating and cooling of the plastic connection element and the hose at different times will be prevented.

Another advantage of the method of the invention is that the hose can be produced as a single product with the connection elements. The method eliminates the risks such as deformation of the surface, wrong positioning of the connection elements etc. that can be caused by the welding.

### Description of the Drawings

Figure 1, shows a perspective drawing of the empty form of the mold in the method of the invention.
Figure 2, shows a perspective drawing of the flow of the hose into the mold in the method of the invention.
Figure 3, shows a perspective drawing of a first mold element in the method of the invention.
Figure 4, shows a perspective drawing of a second mold element in the method of the invention.
Figure 5, shows a perspective drawing of the connection element and the hose when they are taken out of the mold in the method of the invention.
Figure 6, shows another perspective drawing of the product when it is taken out of the mold in the method of the invention.
Figure 7, shows a perspective drawing of the cross-section of the hose in the method of the invention.
Figure 8, shows the flow chart of the mold of the plastic blow mold of the invention.

### Reference Number of the Sections and Elements to Help Describe the Invention

1- Mold
   1a- First mold element
   1b- Second mold element
2- Mold cavity
   2a- Bend
3- Connection element
4- Hose
   4a- Opening portion
5- Feeding tube
6- Blowing needle

X, Y, Z: Coordinate axes
M-N: Rotation direction

### Steps of production;

100: Step of production of connection elements
110: Step of heating the connection elements
120: Step of placing the connection elements and closing the mold
130: Hose pouring stage
140: Blowing stage
150: Step of leaving in the mold to cool
160: Step of taking out the blow molded hose from the mold

### Detailed Description of the Invention

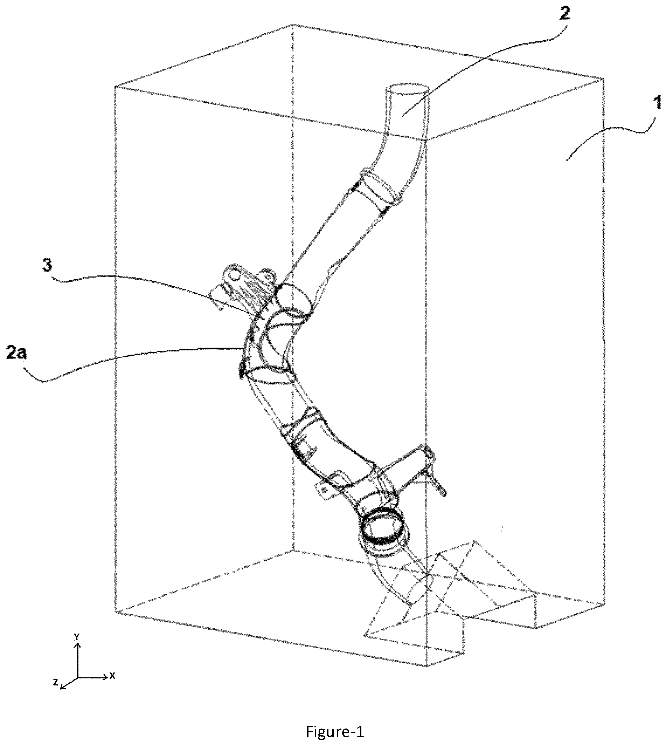

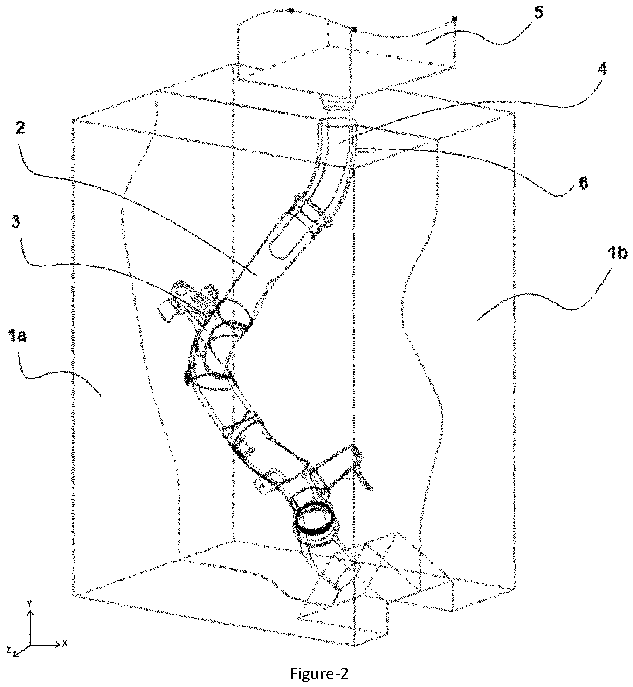

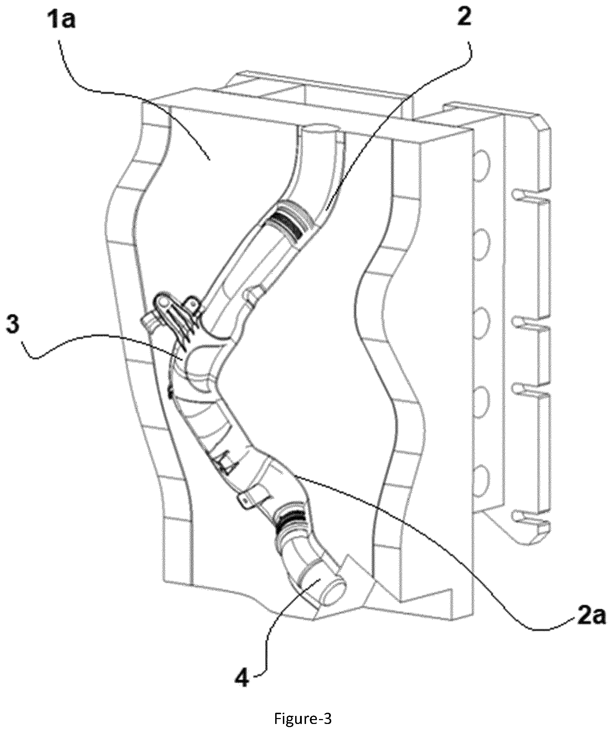

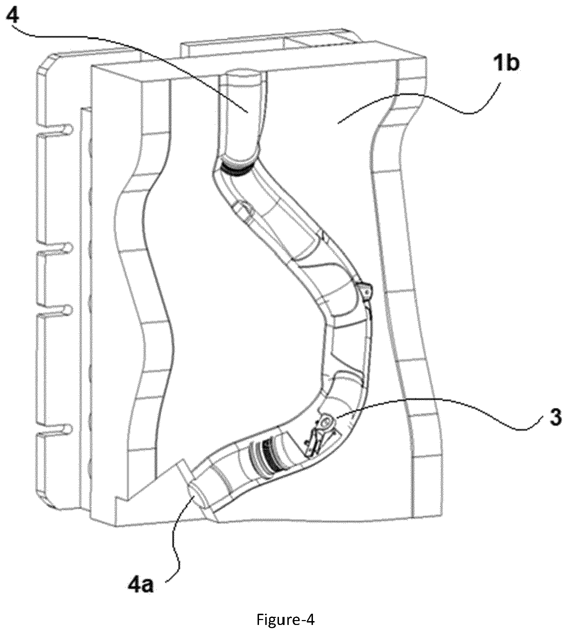

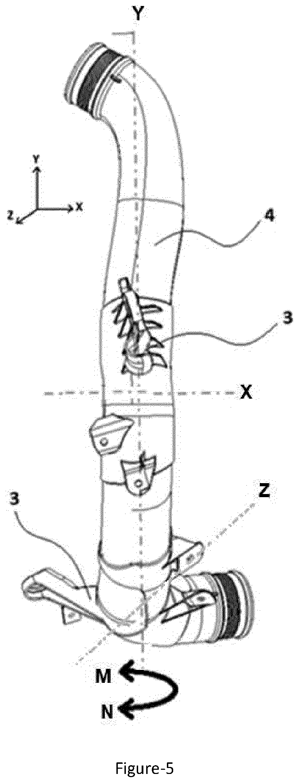

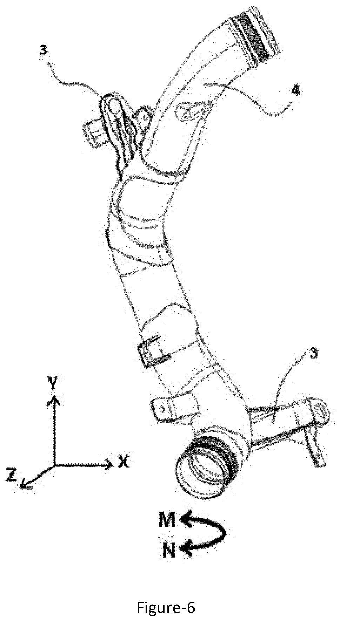

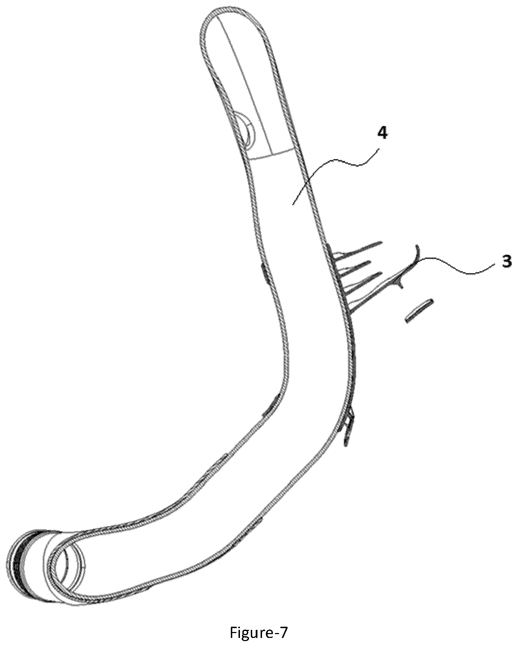

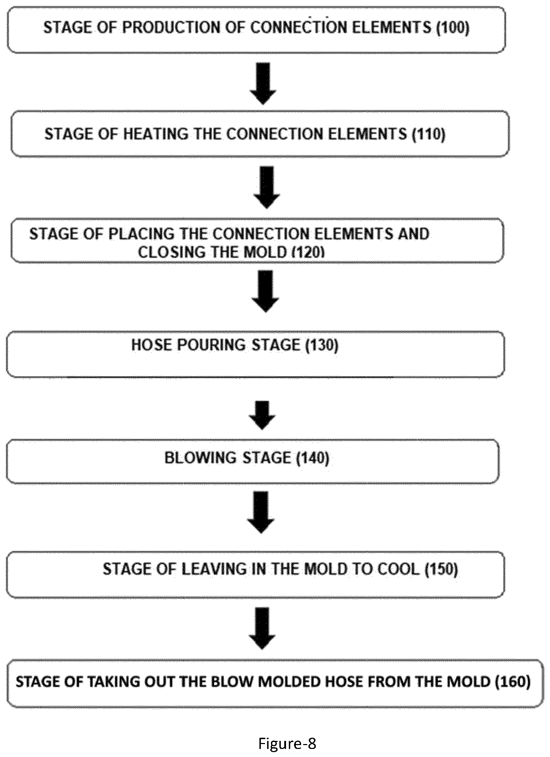

The method of the invention is developed in order to produce a hose which carries the turbocharger and the cooler in the engine part in the automotive industry with a single blow molding operation without requiring an additional step of operation. However desired protection of the said design can be used in not only products of the automotive industry but also in every product where plastic blowing mold produced in suitable shapes is used. For a clear understanding of the method of the invention, the empty form of the mold (1) is shown in Figure 1; its form during production is shown in Figure 2; elements of the mold is shown in Figure 3 and Figure 4; the completed end-product is shown in Figure 5, Figure 6 and Figure 7; and the flow chart of the procedures of the production method of the product is shown is Figure 8.

In the blow molding method in the state of the art, melt flow index is low and preferably plastic raw material slowly flows downwards by the effect of gravity in the form of a hose. After the hose has extended long enough from the mold in the closed form, a nozzle extends thereinto and via the pressurized air, pushes the plastic toward the walls so that it takes the shape of the mold. When it is adequately cold, the mold is opened and the product with the shape of the interior of the mold is taken out. In the state of the art, a method developed using the blow molding method is described in patent no. EP19920905605; wherein pre-produced additional connection elements are inserted in the mold and a hose flown from a feeding chamber in the molten form passes through these connection elements and the mold cavity. When the hose pouring is completed, blowing is carried out by blowing air and the product takes its final form by being connected to the connection elements. Here, connection elements are placed in a way that they are in one direction and no connection elements are connected to the curved parts of the hose. Additionally, as the connection elements are cold, the parts of the hot flowing hose in connection with these parts, gets cold rapidly and a tightness problems between the connection elements occurs. In the mold of the invention, this problem is overcome by connecting the connection elements (inserts) even at the curved parts of the invention and by inserting the connection element into the hose after subjecting it to a certain heat treatment.

In the mold of the invention, the mold (1) consists of an at least two-part structure with a first mold element (1a) and second mold element (1b). At the midsection of the mold (1), there is a mold cavity (2) comprising at least one curve (2a). In the said mold cavity (2), the mold comprises at least one connection element (3) positioned at the curve (2a) which provides easy flow of the hose (4) in the molten form preferably made from plastic raw material and enables the hose (4) to advance to at least one of X or Z axes during its flow along the Y axis. As the hose (4) is connected to the connection element (3) at the curve (2a) portion, it is fixed in the Y axis upwards and downwards, as well as in the direction of rotation (M-N) and its movement is inhibited. Therefore in the production method of the invention, the connection element (3) and the hose (4) are interlocked to each other and their movement on each other is prevented.

In the method of the invention, connection elements (3) are produced at first and then preferably these connection elements (3) are subjected to a heat treatment. Then connection elements (3) are inserted into the mold (1) where the blow molding procedure will take place. Said mold (1) comprises a mold cavity (2) in the midsection and the preferably plastic hose (4) flowing from the feeding tube (5) in the molten form reached to the lowest part of the mold (1) by passing through this mold cavity (2) and the connection parts (3) in a curved manner. The flow of the molten plastic hose (4) continues until the hose (4) contacts the bottom of the mold (1). Then blowing is performed with air coming from an blowing needle tip (6) connected to the compressor and the blowing continues until the hose (4) contacts the mold cavity (2). When the hose (4) takes the shape of the mold cavity (2), it becomes connected with the injection elements (3). Blowing procedure is finished and the hose (4) and the said connection elements (3) in connection with the hose (4) are left to cool. After the cooling reaches to a desired point, the mold (1) is opened and the product is taken out. After the connection, the hose (4) connected to the connection parts (3) is prevented from moving upwards and downwards along the Y axis and directions of rotation (M-N) due to the parts where the connection elements (3) are positioned.

When the blow molding method for producing a hose is taken as a process, said process essentially comprises the following stages:
- Stage of production of connection elements (100)
- Stage of heating the connection elements (110)
- Stage of placing the connection elements and closing the mold (120)
- Hose pouring stage (130)
- Blowing stage (140)
- Stage of leaving in the mold to cool (150)
- Stage of taking out the blow molded hose from the mold (160)

The steps these stages comprise are described below:
**Stage of production of connection elements (100):** In this stage, at least one connection element (3) to be inserted into the mold (1) is produced in the injection machines. For the production of the said connection elements (3), methods other than production in the injection elements can be used as well.

**Stage of heating the connection elements (110):** In this stage, connection element (3), preferably made of plastic, to be inserted into the mold (1) is subjected to a heat treatment. Said heat treatment comprises heating the products beforehand via a heating cabin. In the cabin, the temperature of the product goes up to a value between 100 - 150°C. This procedure intends to prevent the early cooling when the hose (4) flowing to the mold (1) in a hot form during production contacts the connection elements (3).

**Stage of placing the connection elements and closing the mold (120):** In this stage, connection elements (3) are placed in the connection element cavities in the mold (1). At least on connection element (3) is preferably placed in a way that it corresponds to the curve or corner parts of the hose (4) and upwards and downwards and directions of rotation (M-N) movement of the hose (4) along the Y axis is prevented. In order to hold the connection elements (3) in a fixed manner in the mold (1) and to prevent the connection element (3) from moving, suction system is incorporated between the mold (1) and the connection element (3). There are two suction systems for two connection elements (3) in the mold (1). Vacuum effect is made by sucking air through the holes in the middle part of the suction holders. During the contact of the connection element (3) here, connection element (3) is held with the vacuum effect and its movement is prevented. After inserting the connection elements (3) into the mold (1), the mold (1) is closed.

**Hose pouring stage (130):** In this stage, after the mold (1) is closed, plastic hose (4) in the molten form is poured from the feeding tube (5). The hose (4) starts flowing from the mold cavity (2) which is positioned at the midsection of the mold (1), shaped according to the product to be produced and has curves (2a). The placement of the connection elements (3) preferably on the corner and curved parts of the hose to be produced in a curved manner, enables the hose (4) to flow by moving not only in a vertical manner along the Y axis but also forward and backward along the X axis and rightward and leftward at the Z axis. Flowing procedure stops when the hose (4) reaches the opening portion (4a) at the bottom of the mold (1).

**Blowing stage (140):** In this stage, when the flow of the hose (4) from the feeding tube (5) is stopped, the hose (4) is blown by blowing air. When the hose (4) reaches the vacuuming portion at the lowest part of the mold (1), upper and lower parts of the mold (1) closes and the flow of the hose (4) automatically stops. Then the blowing needle (6) inserts into the hose (4) and air is blown, then the hose (4) adheres to the inner walls of the mold (1) and the connection elements (3) the temperatures of which are lower than the hose. In the meanwhile, the hose (4) is hardens and the blowing procedure is complete.

**Stage of leaving in the mold to cool (150):** In this stage, after the hardening of the hose (4), the cooling of the hot hose (4) in the mold (1), i.e. the cycle time, is between 50-150 seconds. The hose (4) is cooled to 100-150°C in the mold (1). The connection elements (3) placed on the mold (1) by being subjected to a heat treatment cools along with the hose (4).

**Stage of taking out the blow molded hose from the mold (160):** In this stage, the hose (4) at the desired cooling level connected with the connection elements (3), is taken out of the mold (1) by disconnection of the first mold element (1a) and the second mold element (2) from each other. When there is pulling enough to interlock the connection element (3) and the hose (4) with the cooling of the hose (4) and the connection element (3), the elements gets interlocked. After being taken out of the mold (1) the temperature of the product reaches to the room temperature (20-30° C). The feature of the end-product taken out of the mold is having at least one connection element (3) on the hose (4) which is prevented from moving upwards and downward in the Y axis and in the direction of rotation (M-N).

### Implementation of the Invention in the Industry

The system of the invention and the method where this system is implemented are used essentially in the automotive section to make a hose which carries fresh air between the turbocharger and the intercooler in the engine of the vehicle. However, it can also be used in the automotive industry and other industry where a similar element (plastic hollowed body) production is present. For example, this type of mold and method can be used in the production of white goods and brown goods in the plastic packaging industry.

## Claims

1. A blow molding method for producing plastic hollowed bodies, i.e. for producing
a hose, the method comprises the following stages;
- Stage of production of connection elements (100),
- Stage of heating the connection elements (110),
- Stage of placing the connection elements and closing the mold (120),
- Hose pouring stage (130),
- Blowing stage (140),
- Stage of holding in the mold (150) to cool,
- Stage of taking out the blow molded hose from the mold (160),
wherein the stage of production of connection elements (100) comprises the production of at least one connection element (3) to be placed in the mold (1), wherein the stage of heating the connection elements (110) comprises heating at least one connection elements (3) prior to placing in the mold (1),
wherein the hose pouring stage (130) comprises pouring the molten hose (4) from the feeding tube (5),
**characterized in that** in order to enable the molten hose (4) to flow by moving not only in a vertical manner along the Y axis but also forward and backward along the X axis and rightward and leftward at the Z axis; the stage of placing the connection elements and closing the mold (120) comprises placing at least one connection element (3) in the mold (1) such that it corresponds to the curve (2a) of the hose (4), and closing the mold (1).

2. A blow molding method for producing a hose according to Claim 1, **characterized in that** the blowing stage (140) comprises the blowing of the hose (4) by the way of giving an air by insertion of a blowing needle (6) into the hose (4) when the flow of the hose (4) from the feeding tube (5) stops.

3. A blow molding method for producing a hose according to claim 1, **characterized in that** the stage of holding in the mold (150) comprises waiting for the hot hose (4) to cool to 100-150°C in the mold (1) after the molten hose (4) in the pouring stage (130) has hardened at the end of the blowing stage (140).

4. A blow molding method for producing a hose according to claim 1, **characterized in that** the stage of taking out the blow molded hose from the mold (160) comprises taking out the hose (4) interconnected with the connection element (3) from the mold (1) through the mold cavity (2) after the disconnection of the first mold element (1a) and the second mold element (1b) from each other with the cooling of the hose (4) and the connection element (3).

## Patentansprüche

1. Blasformverfahren zur Herstellung von Kunststoffhohlkörpern, d.h. zur Herstellung eines Schlauches, wobei das Verfahren die folgenden Stufen umfasst:
- Stufe der Herstellung von Verbindungselementen (100),
- Stufe des Erwärmens der Verbindungselemente (110),
- Stufe des Einsetzens der Verbindungselemente und des Schließens der Form (120),
- Schlauchgießstufe (130),
- Blasstufe (140),
- Stufe des Haltens in der Form (150) zum Abkühlen,
- Stufe des Entnehmens des blasgeformten Schlauches aus der Form (160),
wobei die Stufe der Herstellung von Verbindungselementen (100) die Herstellung von mindestens einem Verbindungselement (3) umfasst, das in die Form (1) eingesetzt wird,
wobei die Stufe des Erwärmens der Verbindungselemente (110) das Erwärmen mindestens eines Verbindungselements (3) vor dem Einsetzen in die Form (1) umfasst,
wobei die Schlauchgießstufe (130) das Gießen des geschmolzenen Schlauches (4) aus dem Zuführrohr (5) umfasst,
**dadurch gekennzeichnet, dass,** um zu ermöglichen, dass der geschmolzene Schlauch (4) fließt, indem er sich nicht nur in einer vertikalen Weise entlang der Y-Achse bewegt, sondern auch vorwärts und rückwärts entlang der X-Achse und nach rechts und links an der Z-Achse; die Stufe des Einsetzens der Verbindungselemente und des Schließens der Form (120) das Einsetzen von mindestens einem Verbindungselement (3) in der Form (1), so dass es der Krümmung (2a) des Schlauches (4) entspricht, und das Schließen der Form (1) umfasst.

2. Blasformverfahren zur Herstellung eines Schlauches nach Anspruch 1, **dadurch gekennzeichnet, dass** die Blasstufe (140) das Blasen des Schlauches (4) durch Zuführen von Luft durch Einführen einer Blasnadel (6) in den Schlauch (4) umfasst, wenn der Fluss des Schlauches (4) aus dem Zuführrohr (5) stoppt.

3. Blasformverfahren zur Herstellung eines Schlauches nach Anspruch 1, **dadurch gekennzeichnet, dass** die Stufe des Haltens in der Form (150) das Abwarten des Abkühlens des heißen Schlauches (4) auf 100-150°C in der Form (1) umfasst, nachdem der geschmolzene Schlauch (4) in der Gießstufe (130) am Ende der Blasstufe (140) ausgehärtet ist.

4. Blasformverfahren zur Herstellung eines Schlauches nach Anspruch 1, **dadurch gekennzeichnet, dass** die Stufe des Entnehmens des blasgeformten Schlauches aus der Form (160) das Entnehmen des mit dem Verbindungselement (3) verbundenen Schlauches (4) aus der Form (1) durch den Formhohlraum (2) nach dem Trennen des ersten Formelements (1a) und des zweiten Formelements (1b) voneinander unter Kühlung des Schlauches (4) und des Verbindungselements (3) umfasst.

## Revendications

1. Procédé de moulage par soufflage pour produire des corps creux en plastique, c'est-à-dire pour produire un tuyau, le procédé comprend les étapes suivantes ;
- Étape de production des éléments de connexion (100),
- Étape de chauffage des éléments de connexion (100),
- Étape de mise en place des éléments de connexion, et de fermeture du moule (120),
- Étape de coulée du tuyau (130),
- Étape de soufflage (140),
- Étape de maintien dans le moule (150) pour refroidir,
- Étape de sortie du tuyau moulé par soufflage du moule (160),
dans lequel l'étape de production des éléments de connexion (100) comprend la production d'au moins un élément de connexion (3) à placer dans le moule (1),
dans lequel l'étape de chauffage des éléments de connexion (110) comprend le chauffage d'au moins un élément de connexion (3) avant mise en place dans le moule (1),
dans lequel l'étage de coulée du tuyau (130) comprend le versement du tuyau fondu (4) à partir du tube d'alimentation (5),
**caractérisé en ce que** pour permettre au tuyau fondu (4) de s'écouler en se déplaçant non seulement de manière verticale le long de l'axe Y, mais également vers l'avant et vers l'arrière le long de l'axe X et vers la droite et la gauche au niveau de l'axe Z; l'étape de placement des éléments de connexion, et de fermeture du moule (120) comprend le placement d'au moins un élément de connexion (3) dans le moule (1) de telle sorte qu'il corresponde à la courbe (2a) du tuyau (4), et la fermeture du moule (1).

2. Procédé de soufflage pour la production d'un tuyau selon la Revendication 1, **caractérisé en ce que** l'étape de soufflage (140) comprend le soufflage du tuyau (4) en donnant de l'air par insertion d'une aiguille de soufflage (6) dans le tuyau (4) lorsque l'écoulement du tuyau (4) à partir du tube d'alimentation (5) s'arrête.

3. Procédé de soufflage pour la production d'un tuyau selon la revendication 1, **caractérisé en ce que** l'étape de maintien dans le moule (150) comprend l'attente que le tuyau chaud (4) refroidisse à 100-150°C dans le moule (1) après le tuyau fondu (4) dans l'étape de coulée (130) a durci à la fin de l'étape de soufflage (140).

4. Procédé de soufflage pour la production d'un tuyau selon la revendication 1, **caractérisé en ce que** l'étape de sortie du tuyau moulé par soufflage du moule (160) comprend le retrait du tuyau (4) interconnecté avec l'élément de connexion (3) du moule (1) à travers la cavité de moule (2) après la déconnexion du premier élément de moule (1a) et du deuxième élément de moule (1b) l'un de l'autre avec le refroidissement du tuyau (4) et de l'élément de connexion (3).
